# EUROPEAN PATENT SPECIFICATION

(11) **EP 3 636 800 B1**
(45) Date of publication and mention of the grant of the patent: **20.03.2024**
(21) Application number: 19213692.7
(22) Date of filing: 22.09.2017
(51) Int. Cl.: C23C 18/12, C23F 11/00, C09D 5/08, C09D 7/63, C23F 11/18, C23F 11/16, C09D 175/04, C08K 5/37

(54) **CORROSION RESISTANT SURFACE TREATMENT AND PRIMER SYSTEM FOR ALUMINUM AIRCRAFT USING CHROMIUM-FREE INHIBITORS**
KORROSIONSBESTÄNDIGE OBERFLÄCHENBEHANDLUNG UND GRUNDIERUNGSVORRICHTUNG FÜR ALUMINIUMFLUGZEUG MIT VERWENDUNG VON CHROMFREIEN INHIBITOREN
TRAITEMENT DE SURFACE RÉSISTANT À LA CORROSION ET SYSTÈME D'AMORCE POUR AÉRONEF EN ALUMINIUM À L'AIDE D'INHIBITEURS EXEMPTS DE CHROME

(30) Priority: 23.09.2016 US 201615274456
(43) Date of publication of application: 15.04.2020
(62) Divisional of application: 17192603.3
(73) Proprietor: The Boeing Company, Arlington, VA 22202 (US)
(72) Inventor: KINLEN, Patrick J., Chicago, 60606-1596 (US); KRIENKE, Kenneth A., Chicago, 60606-1596 (US)
(74) Representative: Snaith, James Michael

(56) References cited:
- EP-A1- 3 031 950
- WO-A1-2016/049118
- US-A- 5 958 578
- US-A1- 2012 308 830

## Description

### Field

Disclosed herein are descriptions that relate generally to corrosion inhibiting compositions and methods of using the corrosion inhibiting compositions for a surface treatment and primer system.

### Background

Corrosion is defined as the chemical or electrochemical reaction between a material, usually a metal, and its environment that produces a deterioration of the material and its properties. Corrosive attack begins on the surface of the metal. The corrosion process involves two chemical changes. The metal that is attacked or oxidized undergoes an anodic change, with the corrosive agent being reduced and undergoing a cathodic change.

Chromium-based anti-corrosive systems containing hexavalent chromium compounds have proven to be an extremely useful and versatile group of chemistries that are extensively used in aircraft metal treatment processes. They impart many beneficial anti-corrosive characteristics to metallic substrates on which they are applied and have been used extensively for the pre-treatment of metals before coating, adhesive bonding and surface finishing. Chemically, chromium-based anti-corrosive systems have involved the combination of hexavalent chromium (e.g., CrO₃, CrO₄⁻², Cr₂O₇⁻²) and hydrofluoric acid (HF) in the case of aluminum and its alloys. The hydrofluoric acid removes oxide film from the surface of the metallic substrate (e.g., aluminum) and the hexavalent chromium reacts with the exposed metal and a trivalent chromium oxide precipitates. Using aluminum as an example:

Cr₂O₇⁻²+2Al⁰+2H⁺ → Cr₂O₇.H₂O+Al₂O₃.

Chromium oxide, such as that produced according to the above reaction, is quite useful in anti-corrosive applications. It is quite stable in alkaline environments, it is water repellant (hydrophobic) and may act as a barrier coating towards water. Finally, it exhibits a "self-healing effect"--that is, residual hexavalent chromium in the coating may react with damaged areas of the coating--thereby producing more trivalent chromium oxide repassivated at exposed, damaged sites. Consequently, chromium-based, and in particular hexavalent chromium-based systems have been extensively used in the aerospace industry because they have proven to be: highly effective at reducing corrosion and as an adhesion promoter for organic coatings and adhesives; particularly resilient as the application/treatment process exhibits a low sensitivity towards variation in process conditions; extremely effective on aluminum alloys; and ensure considerable quality control characteristics as a skilled worker may tell the amount of chromium on the surface of a substrate by mere inspection (color) of the coating.

Concern about chromium--and in particular, hexavalent chromium--in the environment has generated a need to replace chromium-based systems. Therefore "environmentally friendly", commercially acceptable alternative to chromium-based systems are a welcome addition to corrosion prevention coatings.

EP3031950 discloses corrosion inhibiting coating materials comprise a sol-gel and a corrosion-inhibiting compound with at least one disulfide group. The corrosion-inhibiting compound is contained within the sol-gel. Coated and/or laminated structures may include the corrosion-inhibiting coating materials on a metal substrate, and may include a secondary layer (e.g., a paint, etc.) adhered to the coating material opposite the metal substrate. Methods of forming a corrosion-inhibiting sol-gel comprise mixing organo-metallic compounds and the corrosion-inhibiting compound into a sol solution and incubating (e.g., reacting) the sol solution to form the corrosion-inhibiting sol-gel with the corrosion-inhibiting compound contained within the sol-gel. Generally, corrosion-inhibiting coating materials are hexavalent chromium free". US2012308830 has an abstract, which states "a coating system for application to a substrate having a sol-gel film layer applied thereon includes a residual high acid value coating coat applied on top of the sol-gel film without an intervening adhesion layer. The residual high acid value coating composition may be a solvent borne composition that when cured, has a high level of residual free acid groups, equivalent to an acid number of greater than about 65 mgKOH/g. The residual high acid value coating may include a residual high acid value resin namely, a resin that cures having residual free acid groups, equivalent to an acid number of greater than about 65 mgKOH/g. The residual high acid value resin may be the reaction product of a polyol and a suitable crosslinker, such as a polyanhydride or polyisocyanate crosslinker or blend thereof. The residual high acid value coating composition may include opacifying pigments and condensation catalysts.

WO 2016049118 discloses compositions are described for protecting a metal surface against corrosion. The composition includes a corrosion-inhibiting particle. The corrosion inhibiting particle may be usable in an epoxy resin-based coating or an olefin resin-based coating. The particle may include a core and a protectant. The core may include a water soluble corrosion inhibitor. The protectant may be disposed on at least a portion of a surface of the core and may be covalently or ionically bonded to a thiol group of the corrosion inhibitor. The protectant may be configured to reduce reaction between the core and the epoxy resin or the olefin resin.

### Summary

In an aspect, an article is provided as defined in claim 1. In another aspect, a method for coating an article is provided as defined in claim 10. An article includes a substrate; a first corrosion protection layer disposed on the substrate; and a second corrosion protection layer disposed on the first corrosion protection layer. The first corrosion protection layer includes a sol-gel composition and the second corrosion protection layer includes a polyurethane composition. At least one of the first or second corrosion protection layers include a corrosion inhibitor.

A method for forming an article includes forming a first corrosion protection layer on a substrate; and forming a second corrosion protection layer on the first corrosion protection layer. The first corrosion protection layer includes a sol-gel composition and the second corrosion protection layer includes a polyurethane composition. At least the second corrosion protection layers include a corrosion inhibitor.

The compositions, coatings and methods disclosed herein may be used for providing corrosion protection and durability for metallic articles such as components of a vehicle, such as an airplane. Additional advantages will be set forth in part in the description which follows, and in part will be understood from the description, or may be learned by practice thereof. The advantages will be realized and attained by means of the elements and combinations particularly pointed out in the appended claims.

It is to be understood that the foregoing general description and the following detailed description are exemplary and explanatory and are not restrictive of that which is claimed. The accompanying drawings, which are incorporated in and constitute a part of this specification, illustrate examples and together with the description, serve to explain the principles of that which is described herein.

### Brief Description of the Drawings

**FIG. 1** illustrates one example of an aircraft.
**FIG. 2** illustrates an article comprising a substrate, a first corrosion protection layer disposed thereon, a second corrosion protection layer disposed on the first correction protection layer and a topcoat disposed on the second corrosion protection layer.
**FIG. 3** illustrates a process flowchart corresponding to a method for making an article, such as the article of FIG. 2.
**FIG. 4A** is a process flowchart reflecting some aircraft manufacturing and service operations.
**FIG. 4B** is a block diagram illustrating various components of an aircraft.

### Detailed Description

Reference will now be made in detail to the present descriptions, examples of which are illustrated in the accompanying drawings. Wherever possible, the same reference numbers will be used throughout the drawings to refer to the same or like parts.

Notwithstanding that the numerical ranges and parameters setting forth the broad scope of the descriptions are approximations, the numerical values set forth in the specific examples are reported as precisely as possible. Any numerical value inherently contains certain errors necessarily resulting from the standard deviation found in their respective testing measurements. In certain cases, the numerical values as stated for the parameter can take on negative values. In this case, the example value of range stated as "less that 10" can assume negative values, e.g. -1, -2, -3, - 10, -20, -30, etc.

The following is described for illustrative purposes with reference to the Figures. Those of skill in the art will appreciate that the following description is exemplary in nature, and that various modifications to the parameters set forth herein could be made without departing from the scope of the present disclosure as defined in the appended claims. It is intended that the specification and examples be considered as examples. The various descriptions are not necessarily mutually exclusive, as some descriptions can be combined with one or more other descriptions to form combined descriptions.

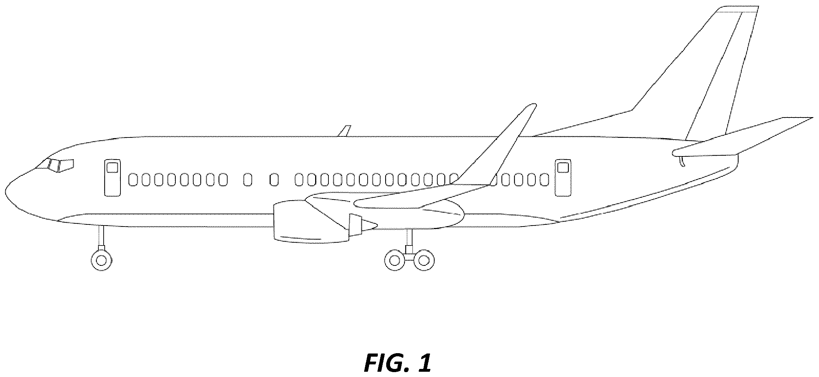

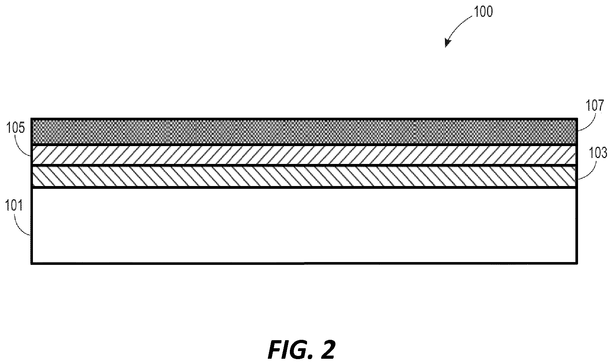

Articles, such as any external and/or internal metallic surface(s) and/or component(s), that are subject to environmental corrosion, in particular to oxidative corrosion such as those of a vehicle, such as an aircraft shown in FIG. 1 or a metal component of a vehicle can be protected against such corrosion. A metal surface of such an article(s) may be protected by treating with corrosion-inhibiting coating formed from a corrosion-inhibiting coating composition. For example, as shown for article 100 in FIG. 2, a first corrosion protection layer 103 is disposed over substrate 101, for example, on a surface of substrate 101. A second corrosion protection layer 105 is disposed over the first corrosion protection layer 103, for example, on a surface of first corrosion protection layer 103. The first corrosion protection layer 103 comprises a sol-gel composition. The second corrosion protection layer 105 comprises a polyurethane composition. The first corrosion protection layer 103, the second corrosion protection layer 105, or both layers 103 and 105 further comprise a corrosion inhibitor. The first corrosion protection layer 103, the second corrosion protection layer 105, or both may be free of or substantially free of hexavalent chromium. For example, the layers may each or separately be chrome-free. However, in at least one implementation, the first corrosion protection layer 103, the second corrosion protection layer 105, or both may include hexavalent chromium.

The first corrosion protection layer 103 may comprise a composition that is different than a composition of the second corrosion resistant layer 105. That is, in an implementation, the first corrosion protection layer 103 may comprise the sol-gel composition, the second corrosion protection layer 105 may comprise the polyurethane composition and each of the first corrosion protection layer 103 and the second corrosion protection layer 105 may comprise the same corrosion inhibitor or may each comprise different corrosion inhibitors. For example, in the case for which the first corrosion protection layer 103 and the second corrosion protection layer 105 each comprise different corrosion inhibitors, the first corrosion protection layer 103 may comprise a first corrosion inhibitor and the second corrosion protection layer 105 may comprise a second corrosion inhibitor that is different than the first corrosion inhibitor. While not limited to any particular implementation, one reason to include different corrosion inhibitors in each of the corrosion protection layers 103 and 105 may be to prevent or minimize damage to a particular corrosion protection layer caused by its corresponding corrosion inhibitor. Meanwhile, one reason to include the same corrosion inhibitor in each of the first corrosion protection layer 103 and the second corrosion protection layer 105 is to reduce costs by minimizing the number of raw materials that need to be purchased and/or minimizing the number of processing steps required to introduce additional raw materials.

A topcoat layer 107 may be formed over the second corrosion protection layer, for example, a surface of the second corrosion protection layer. The top coat layer 107 may function as a protective coating over all, or substantially all of the first corrosion protection layer and/or the second corrosion protection layer. The topcoat layer 107 may comprise a polyurethane paint or coating, a urethane paint or coating, an acrylic paint or coating, an adhesive coating, a combination thereof, or another suitable topcoat layer. The topcoat layer 107 may be at least one of durable, abrasion resistant, chemical resistant, heat resistant, and visually appealing. The topcoat may comprise at least one corrosion-inhibitor. The corrosion inhibitor of the topcoat layer 107 may be the same or different than a corrosion-inhibitor of the first corrosion protection layer 103. The corrosion inhibitor of the topcoat layer 107 may be the same or different than a corrosion inhibitor of the second protection layer 105.

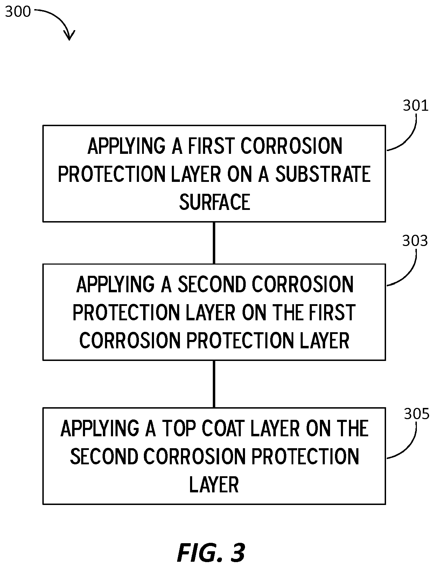

FIG. 3 is a flow-chart of a method 300 for forming an article, such as for forming article 100 of FIG. 2. The method includes applying a first corrosion protection layer on a substrate surface at 301, applying a second corrosion protection layer on the first corrosion protection layer at 303, and applying a topcoat layer on the second corrosion protection layer at 305.

As described above, the first corrosion protection layer comprises a sol-gel composition. Thus, the applying of the first corrosion protection layer on the substrate can include spraying sol-gel composition onto to the substrate. Other deposition techniques may be used as well, such as dipping, immersion, spinning, and brushing. In some examples, a spray-drenching technique may be used. This technique involves spraying generously the substrate with the sol-gel material and allowing excess of the sol-gel material to run off the surface of the conversion layer. In some examples, before the deposited sol-gel is dried additional sol-gel material may be formed thereon (e.g., via spraying). This operation may be repeated multiple times to deposit an adequate amount of the sol-gel material onto the surface, for example, an amount of the sol-gel material for forming a continuous layer on the surface. It will be appreciated that the deposited sol-gel material may not be dried. Sol gel must be kept wet for about 0.5 minutes to 5 minutes, e.g., about 2 minutes (depending on specific sol gel formulation used) before spraying additional sol-gel material on it.

As described above, the second corrosion protection layer comprises a polyurethane. The polyurethane may be deposited onto a surface, such as a surface of the first corrosion protection layer, by methods known in the art, including immersing, brushing, and/or wiping the coating material. The polyurethane may include at least one of UV absorbers and light stabilizers. In an example, aliphatic polyurethane may be used. While not limited to any particular theory, it is believed that aliphatic polyurethanes are highly UV stable and highly resistant to yellowing.

Substrate 101 of article 100 comprises a metal or a metal alloy. An exemplary metal for substrate 101 comprises aluminum and aluminum alloys, steel, magnesium and magnesium alloys, copper and copper alloys, tin and tin alloys, nickel alloys and titanium and titanium alloys. Substrate 101 may be at least a portion, for example an internal and/or external surface and/or component of a vehicle, such as an airplane.

The first corrosion protection layer 103 can be formed from a first corrosion-inhibiting coating composition that includes a first carrier and may include a corrosion inhibitor, such as a plurality of non-chromium-based (i.e., non-chrome) corrosion inhibitor particles. The first carrier may comprise a material that bonds to the substrate and/or bonds to the second corrosion protection layer. In an example, the first carrier may comprise an anti-corrosive sol-gel composition. The term "sol-gel," a contraction of solution-gelation, refers to a series of reactions where a soluble metal species, typically a metal alkoxide or metal salt, hydrolyzes to form a metal hydroxide. The soluble metal species usually contain organic ligands. The metal hydroxides condense (peptize) in solution to form a hybrid organic/inorganic polymer. Depending on reaction conditions, the metal polymers may condense to colloidal particles or they may grow to form a network gel. The ratio of organics to inorganics in the polymer matrix is controlled to maximize performance for a particular application.

The corrosion inhibitor may be incorporated with the corrosion-inhibiting coating composition. That is, if a corrosion inhibitor is included in the first corrosion protection layer, the corrosion inhibitor may be in the sol-gel composition. The first corrosion-inhibiting coating composition may be cured with or without incorporated corrosion inhibitor to form the first corrosion protection layer 103.

The anti-corrosive sol-gel composition includes an organometallic compound and an organosilane. The organometallic compound covalently bonds to the underlying substrate, such as a metal surface, through the metallic constituent and the organosilane covalently bonds to at least the second corrosion protection layer which may comprise a primer, for example a polyurethane primer.

An exemplary organometallic compound is an alkoxy metallic compound, and preferably an alkoxy zirconium compound. The preferred zirconium compounds are of the general formula Zr(OR)₄ wherein R is a lower aliphatic having 2-8 carbon atoms, especially normal aliphatic groups (alkyl groups) and tetra n-zirconium. Because of its ready commercial availability, Zr (IV) n-propoxide is preferred as the organometallic compound. Alkoxy metallic compounds having branched aliphatic, alicyclic, or aryl groups also perform satisfactorily. In addition to covalently bonding to the metal surface, the organozirconium compound also serves to minimize the diffusion of oxygen to the surface and to stabilize the metal-resin interface. Additionally other metal alkoxides, such as titanates, and yttrium alkoxides, may be utilized as the alkoxide.

According to the invention, the sol-gel composition includes 3-glycidoxypropyltrimethoxysilane (GTMS). Other suitable organosilanes for making the sol-gel coating, not being according to the presently claimed invention include, but are not limited to, tetraethylorthosilicate, 3-aminopropyltriethoxysilane, 3-glycidoxypropyltriethoxysilane, p-aminophenylsilane, p or m-aminophenylsilane, allyltrimethoxysilane, n-(2-aminoethyl)-3-aminopropyltrimethoxysilane, 3-aminopropyltriethoxysilane, 3-aminopropyltrimethoxysilane, 3-glycidoxypropyldiisopropyl ethoxysilane, (3-glycidoxypropyl)methyldiethoxysilane, 3-glycidoxypropyltrimethoxysilane, 2-(3,4-epoxycyclohexyl)ethyltriethoxysilane, 3-mercaptopropyltrimethoxysilane, 3-mercapto propyltriethoxysilane, 3-methacryloxypropylmethyldiethoxysilane, 3-methacryloxypropylmethyl dimethoxysilane, 3-methacryloxypropyltrimethoxysilane, n-phenylaminopropyltrimethoxysilane, vinylmethyldiethoxysilane, vinyltriethoxysilane, vinyltrimethoxysilane, and combinations thereof. The silane is acid-base neutral, so its presence in the sol mixture does not increase the relative hydrolysis and condensation rates of the alkoxy metallic compounds. Sols including the organosilanes are relatively easy to prepare and to apply with reproducible results.

According to the invention the organosilane for use in the sol-gel composition is GTMS. The GTMS includes an active epoxy group which can react with common epoxy and urethane resins. GTMS does not form strong Lewis acid-base interactions with the hydrated metal oxide substrate. Also, the oxide surface of the metal is more accessible to the zirconium organometallic when GTMS is used as the organosilane, allowing the desired stratification of the sol-gel film in essentially a monolayer with the epoxy groups of the silane coupling agents oriented toward the second corrosion protection layer which may comprise a primer, for example a resin-based primer layer comprising a polyurethane primer. The ideal concentration of the sol depends upon the mode of application. A higher concentration may be preferred for drench or spray applications. Use of GTMS with the zirconium organometallic allows strong covalent bonding to develop between the metal substrate and zirconia and silica, as well as maximizing bonding between the epoxy moiety of the GTMS to the second corrosion protection layer.

In one example, the sol-gel comprises a mixture of GTMS, Zr (IV) n-propoxide, and a phosphate component, in a medium of water, methanol, and acetic acid. The GTMS and Zr (IV) n-propoxide are preferably present in concentrations of about 2 mls to about 30 mls per 100.0 mls of prepared sol-gel solution. Accordingly, the sol-gel composition may include an organometallic, such as an organozirconium compound, for example, a Zr (IV) n-propoxide; and an organosilane, such GTMS. The sol-gel composition may comprise between about 2% and about 15% by volume, for example 10% by volume, of zirconium n-propoxide and between about 4% and about 30% by volume, for example, 20% by volume, of 3-glycidoxypropyltrimethoxy silane.

The sol-gel composition may further include at least one anti-corrosion additive. For example, a borate, zinc, or phosphate containing additive can impart anti-corrosive properties to the sol-gel and may be present in the sol-gel. Accordingly, the anti-corrosive additive may include a compound with functionality selected from borate, zinc, or phosphate. Exemplary borate, zinc, and phosphate precursors which may be added to the sol-gel are zinc acetate, triethylphosphate, and boron n-butoxide.

Also, an organic acid, preferably acetic acid, can be used as a catalyst and reaction rate stabilizer. In an example, a sol-gel composition includes water and glacial acetic acid as a catalyst. A portion of the water may be replaced with other solvents that provide desirable properties or processing characteristics to the composition. Furthermore, the sol-gel material may include a surfactant. In an example, the surfactant can be an ethoxylated propoxylated C8-C10 alcohol such as ANTAROX^{®} BL-240 available from Rhodia-Solvay Group in Brussels, Belgium.

The thickness of the first corrosion protection layer 103 when coated on, adhered to, and/or bonded to the substrate 101, and/or when the second corrosion protection layer 105 is formed thereon, is relatively thin, i.e., generally thinner than the substrate 101. For example, the thickness of the first corrosion protection layer may be at least 20 nm, at least 100 nm, at least 500 nm, at least 1 µm, at least 5 µm, at least 10 µm, at most 100 µm, at most 10 µm, at most 1 µm, at most 500 nm, and/or at most 100 nm. Thinner coatings may have fewer defects (more likely to be defect free), while thicker coatings may provide more abrasion, electrical, and/or thermal protection to the underlying substrate 101. The thickness of the first corrosion protection layer 103 may be controlled, for example, by varying the composition. In some examples, the thickness is between about 10 nanometers and 800 nanometers, such as between about 100 nanometers and 500 nanometers.

The sol-gel composition may be synthesized or may be obtained from a commercial source, such as AC-131 sol-gel coating (available from AC Technology of Costa Mesa, CA). The first corrosion-inhibiting composition may be applied to a substrate 101 or underlying layer, followed by air-drying and/or UV curing to form a first corrosion protection layer. For example, the sol-gel composition may be formed on the substrate and may be subsequently cured to form a sol-gel layer as the first corrosion protecting layer 103, for example, at a curing temperature of about 65 degrees F or greater. Such a layer may be permeable to allow water to diffuse therein. Additionally, such water may diffuse through the layer and can reach the reactive corrosion-inhibitor. Upon reaching the reactive corrosion-inhibiting agent, the water may dissolve the corrosion-inhibitor, which can then subsequently diffuse out and reach a defect site and absorb to the underlying metal substrate, thereby protecting the substrate against corrosion.

The second corrosion protection layer 105 can be formed from a second corrosion-inhibiting coating composition that includes a second carrier, namely a polyurethane, and includes a corrosion-inhibitor, such as the same or a different non-chromium-based corrosion inhibiting particle as that which may be included in the first corrosion protection layer 103. The corrosion inhibitor is incorporated with the second corrosion-inhibiting coating composition. For example, if a corrosion inhibitor is included in the first corrosion protection layer 103, the corrosion inhibitor is also incorporated in the polyurethane of the second corrosion protection layer 105. However, in an implementation, the second corrosion-inhibiting coating composition may be cured with the incorporated corrosion inhibitor to form the second corrosion protection layer 105.

The second carrier comprises a material that may bond to at least the first corrosion protection layer. According to the invention, the second carrier comprises a polyurethane. Because the corrosion inhibitor may react with epoxy, the second carrier may be substantially free of epoxy. Exemplary compositions for the second carrier include oil-modified polyurethanes, moisture cured polyurethanes, blocked urethanes, two component polyurethanes, aliphatic isocyanate curing polyurethanes, and the like. The polyurethane may a commercially available polyurethane such as Sherwin Williams JETFLEX^{®} interior polyurethane primer CM0480930 (available from The Sherwin Williams Company, Cleveland, OH). Methods for preparing these polymers are known or the polymeric material is available commercially. It should be understood that various modifications to the polymers can be made such as providing it in the form of a copolymer.

The second corrosion protection layer may have a dry film thickness of about 1.0 to 1.1 mils (e.g., about 25 µm to about 28 µm) and a wet thickness of about 3.8 to about 4.2 mils (e.g., about 96 µm to about 106 µm).

The corrosion-inhibitor may be an organic or inorganic compound that imparts corrosion resistance to a metal when at least a portion of it is dissolved. According to the invention, the corrosion inhibitor comprises a plurality of corrosion inhibitor particles, such as a plurality of chemically reactive, non-chrome corrosion-inhibitor particles. The corrosion inhibitor particles are thiol-containing corrosion inhibitor particles in that they include an insoluble thiol or sulfide containing organic molecule.

In an example, the plurality of corrosion-inhibitor particles may be prepared by air-milling of a synthesized or commercially purchased, crude non-chrome corrosion inhibitor. As used herein, the term "non-chrome" refers to materials that are chromium free, for example, they may not include chromium (VI). The corrosion inhibitor may be a disulfide/dithiol compound, for example, an insoluble thiol or sulfide containing organic molecule. The thiol or sulfide containing organic molecule may be a polydisulfide, such as a mercaptan-terminated polysulfide of dimercaptothiadiazole.

The corrosion-inhibitor may be derived from crude non-chrome corrosion inhibitor particles, for example, bulk non-chrome corrosion inhibitor particles formed according to known synthesis routes or available as commercial powders. In an example, the corrosion inhibitor comprises 2,5-dimercapto-1,3,4-thiadiazole (DMCT). Accordingly, the crude corrosion inhibitor may be 5,5-dithiobis-(1,3,4-thiadiazole-2(3H)-thione), Zn (DMcT)2 or Zn (bis-DMcT)₂.

Preparation of a corrosion-inhibiting particle may include precipitation of an insoluble species, such as by dissolving a compound in an organic solvent and then precipitating the corrosion inhibitor out of solution by adding the dissolved compound into a non-solvent. For example, a compound such as the dimer of DMcT, bis-DMcT, may be dissolved in an organic solvent such as THF, and the dissolved bis-DMcT may be added to water to precipitate a crude corrosion inhibitor particle. Alternatively, crude corrosion-inhibitor may be derived from bis-DMCT (e.g., VANLUBE^{®} 829 available from Vanderbilt Chemicals, LLC, Norwalk, CT), or Zn (DMcT)₂ (e.g., INHIBICOR^{®} 1000 or WAYNCOR^{®} 204 available from Wayne Pigment Corporation, Milwaukee, Wl), or a combination of both. While not limited to any particular theory, it is believed that micronizing the crude corrosion-inhibitor exposes functional groups thereof, such as mercaptan-terminated chains, thereby enriching a surface of particles comprising the corrosion-inhibitor.

The corrosion inhibitor may further comprise strontium aluminium polyphosphate hydrate (SAPP) (available as HEUCOPHOS^{®} SAPP from Heubach GmbH of Langelsheim, Germany)

The first corrosion protection layer 103 and the second corrosion protection layer 105 may each include a corrosion inhibitor. In an example, the first corrosion protection layer 103 includes a first corrosion inhibitor and the second corrosion protection layer 105 includes a second corrosion inhibitor, wherein the first and the second corrosion inhibitors are the same or different corrosion inhibitors. Corrosion inhibitor may be present in the first corrosion protection layer in an amount of from about 12 to about 45 pigment volume concentration (PVC), including 24 PVC. The corrosion inhibitor may be present in the second corrosion protection layer in an amount of from about 15 to about 25 PVC, for example, about 20 PVC.

In the context of the present invention, PVC is the ratio of the volume of corrosion inhibitor to the volume of the remaining reagents in the first or second protection layers respectively. For example, for the first corrosion protection layer, the PVC may be calculated as a percentage of the total volume of the corrosion inhibitor to the total volume of the sol-gel reagents (in unhydrolyzed form) that form the sol-gel composition of the first protection layer. In the context of the second corrosion protection layer, the PVC may be calculated as a percentage of the total volume of the corrosion inhibitor to the total volume of the polyurethane reagents (in unhydrolyzed form) that form the polyurethane composition of the second corrosion protection layer. PVC may suitably be measured in accordance with ISO 4618/1.

The formulations that are used in forming the first corrosion protection layer 103 and the second corrosion protection layer 105 may be applied to a substrate or an underlying layer by an appropriate manual or automated coating method, such as dip coating, spin coating, and spray coating, brushing, rolling and the like.

In addition to the sol-gel, polyurethane, and corrosion-inhibitors, the compositions that are used for forming the first corrosion protection layer 103, the second corrosion protection layer 103 or both may include additional materials. For example, any plasticizer, colorant, curing catalyst, residual monomer, surfactant, or any other material that adds useful properties to the first corrosion protection layer, the second corrosion protection layer or both, or at least does not reduce the functionality of the corresponding coating, can be included in the compositions in amounts that are known to those of skill in the art of polymer compounding.

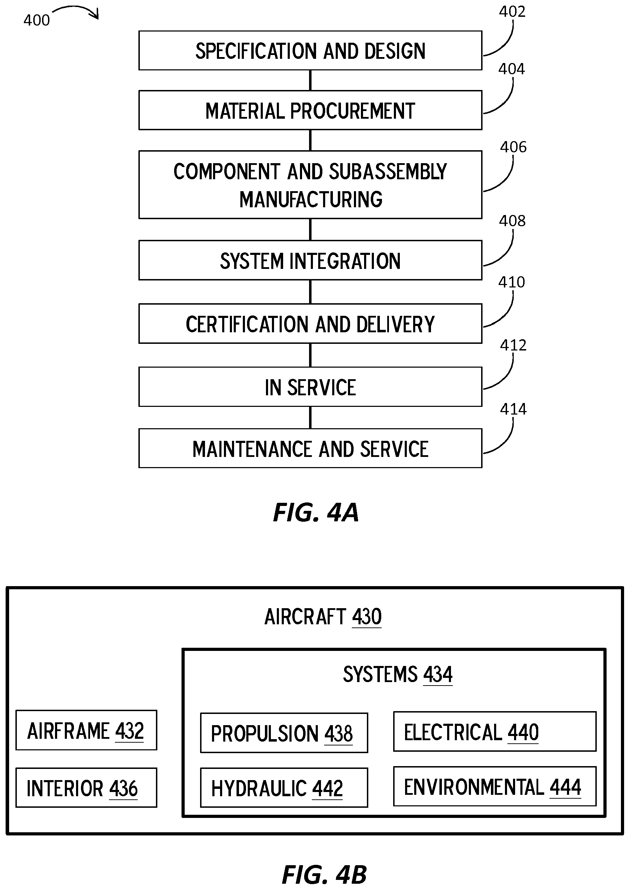

An aircraft manufacturing and service method 400 shown in FIG. 4A and an aircraft 430 shown in FIG. 4B will now be described to better illustrate various features of structural bonds presented herein. During pre-production, aircraft manufacturing and service method 400 may include specification and design 402 of aircraft 430 and material procurement 404. The production phase involves component and subassembly manufacturing 406 and system integration 408 of aircraft 430. Thereafter, aircraft 430 may go through certification and delivery 410 in order to be placed in service 412. While in service by a customer, aircraft 430 is scheduled for routine maintenance and service 414 (which may also include modification, reconfiguration, refurbishment, and so on). While the examples described herein relate generally to servicing of commercial aircraft, they may be practiced at other stages of the aircraft manufacturing and service method 400.

Each of the processes of aircraft manufacturing and service method 400 may be performed or carried out by a system integrator, a third party, and/or an operator (e.g., a customer). For the purposes of this description, a system integrator may include, without limitation, any number of aircraft manufacturers and major-system subcontractors; a third party may include, for example, without limitation, any number of venders, subcontractors, and suppliers; and an operator may be an airline, leasing company, military entity, service organization, and so on.

As shown in FIG. 4B, aircraft 430 produced by aircraft manufacturing and service method 400 may include airframe 432, interior 436, and multiple systems 434 and interior 436. Examples of systems 434 include one or more of propulsion system 438, electrical system 440, hydraulic system 442, and environmental system 444. Any number of other systems may be included in this example. Although an aircraft example is shown, the principles of the disclosure may be applied to other industries, such as the automotive industry.

Apparatus and methods embodied herein may be employed during any one or more of the stages of aircraft manufacturing and service method 400. For example, without limitation, components or subassemblies corresponding to component and subassembly manufacturing 406 may be fabricated or manufactured in a manner similar to components or subassemblies produced while aircraft 430 is in service.

Also, one or more apparatus examples, method examples, or a combination thereof may be utilized during component and subassembly manufacturing 406 and system integration 408, for example, without limitation, by substantially expediting assembly of or reducing the cost of aircraft 430. Similarly, one or more of apparatus examples, method examples, or a combination thereof may be utilized while aircraft 430 is in service, for example, without limitation, to maintenance and service 414 may be used during system integration 408 and/or maintenance and service 414 to determine whether parts may be connected and/or mated to each other.

It is believed that the present methods can be used for forming corrosion protection layers for preventing or reducing corrosion for any corrodible metal. The methods and compositions are useful on steel and aluminum alloys, and on aluminum/copper alloys. For example, the aluminum/copper alloys are those that comprise at least 1% by weight copper, such as aluminum/copper alloys that contain at least 4% by weight copper, for example, copper-containing aluminum alloys AA2024 and AA7075.

### Examples

### Preparation & Evaluation of First Corrosion Protection Layer and Second Corrosion Protection Layer

First and second corrosion protection layers were prepared on AmChem 6-16 deoxidized Alclad 7075 T6 substrate panels and on AmChem 6-16 deoxidized bare 2024 T3 substrate panels. The first corrosion inhibiting coating was formed from a sol-gel surface composition comprising AC-131 and the second corrosion inhibiting coating was formed from JETFLEX^{®} (available from Sherwin-Williams) polyurethane primer. One or both of the AC-131 and JETFLEX^{®} compositions included one or more corrosion inhibitor material (e.g., VANLUBE^{®} 829, WAYNCOR^{®} 204, INHIBICOR^{®} 1000, DMCT, SAPP).

To form the first and second corrosion protection layers, dispersions of the corrosion inhibitor material in AC-131 sol-gel solution and in the JETFLEX^{®} polyurethane primer composition, respectively, were prepared by mixing with 2mm glass beads in a planetary mixer (available from Thinky USA, Inc.) for 20 minutes at 750 rpm. For some samples, the first corrosion protection layer was prepared at 4 different concentrations (0.5 wt%, 1 wt%, 2 wt% and 3 wt%) of dry VANLUBE^{®} 829. For other samples, other corrosion inhibitor materials were included. In some examples, the second corrosion protection layer was prepared with VANLUBE^{®} 829, WAYNCOR^{®} 204 or INHIBICOR^{®} 1000 samples, with each loaded into volumes of fully mixed polyurethane primer at, for example, 20 PVC and 24 PVC levels.

No obvious signs of inhibitor - primer incompatibility was observed during initial mixing and no problems were encountered during the spray application of the coatings using an Iwata Eclipse siphon feed airbrush. However, DMCT corrosion inhibitor appeared to react with the AC-131 solution and, while not limited to any particular theory, is believed to be a result of reaction with epoxy functional groups. For example, clumps of yellow material were observed on the surface of the AC-131 solution. No observable reaction products were noticed for the dispersion of DMCT in the JETFLEX^{®} polyurethane primer composition or during spray application onto the panel substrates.

*Adhesion Testing*: First and second corrosion protection layers were formed on sample substrate panels as described above. The coated panels were dry tape adhesion tested (BSS7225 Type 1, Class 5, 45 degree cross-hatch) and wet tape adhesion tested (BSS7225 Type III, Class 5). The samples for the wet tape adhesion tests were conditioned for five days in 64 degrees C de-ionized (DI) water prior to testing. Tape adhesion testing of the samples was performed after the 5 days of hot water conditioning.

Table 1 below shows the results of dry and wet tape adhesion tests performed on sample panels with various combinations of one or more inhibitors in the first and/or second protection layers. Each of the tests for dry and wet tape adhesion were rated with a score of from 1 to 10. Relative amount of blistering, if any, were noted if observed. All samples containing the mixture of Vanlube 829 and the SAPP inhibitor demonstrated poor wet adhesion and a tendency to blister. All samples with DMCT in the primer also had poor wet tape adhesion and developed blisters during 65 degrees C DI H₂O conditioning. In contrast, samples containing Vanlube 829, Wayncor 204 or Inhibicor 1000 did not blister and had perfect dry and wet tape adhesion test scores.
In Table 1 samples 1, 4 and 10-14 are not according to the presently claimed invention and are displayed for reference only.

**Table 1 - Sample Dry and Wet Tape Adhesion Results**

| **SAMPLE** | **SOL-GEL SURFACE TREATMENT (FIRST LAYER)** | **POLYURETHANE PRIMER (SECOND LAYER)** | **Dry Score** | **Wet Score** | **Blistering?** |
|---|---|---|---|---|---|
| CONTROL | None | None | 10 | 10 | None |
| 1 | Vanlube 829 | None | 10 | 10 | None |
| 2 | None | Vanlube 829 | 10 | 10 | None |
| 3 | Vanlube 829 | Vanlube 829 | 10 | 10 | None |
| 4 | Wayncor 204 | None | 10 | 10 | None |
| 5 | Wayncor 204 | Wayncor 204 | 10 | 10 | None |
| 6 | None | Wayncor 204 | 10 | 10 | None |
| 7 | Vanlube 829 | Wayncor 204 | 10 | 10 | None |
| 8 | None | DMCT | 10 | 4 | Large |
| 9 | Vanlube 829 | DMCT | 10 | 4 | Small |
| 10 | SAPP | None | 10 | 8 | None |
| 11 | SAPP | SAPP | 10 | 10 | Very Small |
| 12 | None | SAPP | 10 | 10 | None |
| 13 | Vanlube 829 | SAPP | 10 | 10 | None |
| 14 | Inhibicor 1000 | None | 10 | 10 | None |
| 15 | Inhibicor 1000 | Inhibicor 1000 | 10 | 10 | None |
| 16 | None | Inhibicor 1000 | 10 | 8 | None |
| 17 | Vanlube 829 | Inhibicor 1000 | 0 | 10 | None |
| 18 | Vanlube 829 & SAPP | Vanlube 829 | 10 | 4 | Small |
| 19 | Vanlube 829 & SAPP | Wayncor 204 | 10 | 4 | Very Small |
| 20 | Vanlube 829 & SAPP | DMCT | 10 | 6 | None |
| 21 | Vanlube 829 & SAPP | Inhibicor 1000 | 10 | 4 | Small |

*Filiform Testing:* First and Second corrosion protection layers were formed on sample panels as described above. The samples were prepared for filiform testing and for scribed neutral salt spray exposures. The samples were evaluated through approximately 500 hours of testing under conditions set forth in the standard, ASTM D2803 - 09(2015). A control substrate was prepared with sol-gel surface treatment compositions (e.g., AC-131 solution) as a first layer and polyurethane primer (e.g., JetFlex) to form a second layer, each layer without corrosion inhibitor. Results are shown in Table 2 below.
In Table 2 samples 1,4 and 10-14 are not according to the presently claimed invention and are displayed for reference only.

**Table 2 - Filform & Salt Spray Testing**

| **SAMPLE** | **SOL-GEL SURFACE TREATMENT (FIRST LAYER)** | **POLYURETHANE PRIMER (SECOND LAYER)** | **RELATIVE RATING** |
|---|---|---|---|
| CONTROL | None | None | N/A |
| 1 | Vanlube 829 | None | Better than Control |
| 2 | None | Vanlube 829 | Same as Control |
| 3 | Vanlube 829 | Vanlube 829 | Worse than Control |
| 4 | Wayncor 204 | None | Worse than Control |
| 5 | Wayncor 204 | Wayncor 204 | Worse than Control |
| 6 | None | Wayncor 204 | Same as Control |
| 7 | Vanlube 829 | Wayncor 204 | Better than Control |
| 8 | None | DMCT | Worse than Control |
| 9 | Vanlube 829 | DMCT | Better than Control |
| 10 | SAPP | None | Better than Control |
| 11 | SAPP | SAPP | Better than Control |
| 12 | None | SAPP | Better than Control |
| 13 | Vanlube 829 | SAPP | Better than Control |
| 14 | Inhibicor 1000 | None | Worse than Control |
| 15 | Inhibicor 1000 | Inhibicor 1000 | Worse than Control |
| 16 | None | Inhibicor 1000 | Worse than Control |
| 17 | Vanlube 829 | Inhibicor 1000 | Better than Control |
| 18 | Vanlube 829 & SAPP | Vanlube 829 | Worse than Control |
| 19 | Vanlube 829 & SAPP | Wayncor 204 | Worse than Control |
| 20 | Vanlube 829 & SAPP | DMCT | Worse than Control |
| 21 | Vanlube 829 & SAPP | Inhibicor 1000 | Worse than Control |

One observation of the data in Table 2 is that none of the samples, except for sample 11 with SAPP corrosion inhibitor in each of the protection layers, exhibited a reduced filament growth below that of the inhibitor-free control sample when the same inhibitor was present in both the AC-131 solution and the JetFlex polyurethane primer. In fact, filiform test performance was significantly worse than that of the inhibitor-free control sample when Vanlube 829, Wayncor 204 or Inhibicor 1000 were added to both the AC-131 coating and the JetFlex polyurethane primer. Filiform test performance was no better than the inhibitor-free control sample when Vanlube 829 or Wayncor 204 was added to the polyurethane primer applied and applied over inhibitor-free AC-131 coatings. However, when these different inhibitors are used in paired combination in the AC-131 and primer layers, corrosion resistance was dramatically improved.

*Salt-Spray Testing:* Samples were assessed under neutral salt spray for 528 hours of total exposure time under conditions set forth in the standard, ASTM B117-16. A value was assigned to indicate the presence or absence of visual features indicating corrosion on the neutral salt spray samples. In contrast to the filiform testing samples, improved corrosion protection relative to the control sample was observed from samples that contained the same inhibitor in both the AC-131 layer and the primer. Notably poor performing inhibitors in neutral salt spray exposures on deoxidized bare 2024 T3 panels were DMCT, SAPP and mixtures of VANLUBE^{®} 829 with SAPP added to the AC-131 coating.

Samples were ranked based on the results of neutral salt spray testing. The best performing samples included those having combinations of different corrosion inhibitors rather than the same inhibitor across both the first corrosion protection layer (e.g., AC-131 coating) and the second corrosion protection layer (e.g., polyurethane primer).

When considered together, the results of filiform, wet-tape adhesion and neutral salt spray testing described above reveal that samples coated with AC-131 containing 24 PVC Vanlube 829 and JetFlex polyurethane primer loaded with either 20 PVC Wayncor 204 or Inhibicor 1000 experienced synergistic corrosion-inhibiting effects that resulted in passing scores for three tests with performance equal to or exceeding unloaded AC-131 over-coated with inhibitor-free JetFlex polyurethane primer.

While the present teachings have been illustrated with respect to one or more implementations, alterations and/or modifications may be made to the illustrated examples without departing from the scope of the appended claims. For example, it will be appreciated that while the process is described as a series of acts or events, the present teachings are not limited by the ordering of such acts or events. Some acts may occur in different orders and/or concurrently with other acts or events apart from those described herein. Also, not all process stages may be required to implement a methodology in accordance with one or more aspects or descriptions of the present teachings. It will be appreciated that structural components and/or processing stages may be added. Further, one or more of the acts depicted herein may be carried out in one or more separate acts and/or phases. Furthermore, to the extent that the terms "including," "includes," "having," "has," "with," or variants thereof are used in either the detailed description and the claims, such terms are intended to be inclusive in a manner similar to the term "comprising." The term "at least one of" is used to mean one or more of the listed items may be selected. Neither "on" nor "over" implies any directionality as used herein. The term "about" indicates that the value listed may be somewhat altered, as long as the alteration does not result in nonconformance of the process or structure to the illustrated descriptions. Finally, "exemplary" indicates the description is used as an example, rather than implying that it is an ideal. Other implementations of the present teachings will be apparent to those skilled in the art from consideration of the specification and practice of the disclosure herein. It is intended that the specification and examples be considered as exemplary only, with a scope of the present teachings being indicated by the following claims.

Other implementations will be apparent to those skilled in the art from consideration of the specification and practice of what is described herein. It is intended that the specification and examples be considered as exemplary only, with a scope of the implementations being indicated by the following claims.

## Claims

1. An article (100), comprising:
a first corrosion protection layer (103) disposed on a substrate (101), wherein the first corrosion protection layer is formed from a sol-gel composition comprising an organometallic compound and 3-glycidoxypropyltrimethoxy silane (GTMS); and
a second corrosion protection layer (105) disposed on the first corrosion protection layer, wherein the second corrosion protection layer comprises a polyurethane composition,
wherein the second corrosion protection layer comprises a corrosion inhibitor and wherein the corrosion inhibitor comprises a plurality of thiol or sulfide containing corrosion inhibitor particles, comprising at least one of a disulfide, a polydisulfide, and a dithiol compound.

2. The article (100) of claim 1, wherein the corrosion inhibitor particles are non-chrome corrosion-inhibitor particles, wherein non-chrome refers to materials that are chromium free.

3. The article (100) of claim 1 or 2, wherein the corrosion inhibitor particles are micronized particles and comprise mercaptan-terminated chains.

4. The article (100) of any one of claims 1-3, wherein the first corrosion protection layer (103) also comprises a corrosion inhibitor.

5. The article (100) of claim 4, wherein:
(i) the corrosion inhibitor of the first corrosion protection layer (103) is different than the corrosion inhibitor of the second corrosion protection layer (105); and/or
(ii) the corrosion inhibitor of the first corrosion protection layer (103) is as defined in claim 2 or 3.

6. The article (100) of any one of claims 1-3, wherein the first corrosion protection layer (103) does not comprise the corrosion inhibitor.

7. The article (100) of any one of claims 1-6, wherein the sol-gel composition comprises (a) silicon and zirconium, optionally wherein the sol-gel composition comprises from 2 ml to 30 ml of an organometal and from 2 ml to 30 ml of GTMS per 100 ml of prepared sol-gel solution.

8. The article (100) of any one of claims 1-7, wherein:
(a) the corrosion inhibitor is present in the first corrosion protection layer (103) in an amount of from 12 to 45 pigment volume concentration (PVC), wherein PVC is calculated as a percentage of the total volume of the corrosion inhibitor to the total volume of sol-gel reagents in unhydrolyzed form that form the sol-gel composition of the first corrosion protection layer, and/or
(b) the corrosion inhibitor is present in the second corrosion protection layer (105) in an amount of from 15 to 25 pigment volume concentration (PVC), wherein PVC is calculated as a percentage of the total volume of the corrosion inhibitor to the total volume of polyurethane reagents in unhydrolyzed form that form the polyurethane composition of the second corrosion protection layer.

9. The article (100) of any one of claims 1-8, further comprising a topcoat layer (107) disposed on the second corrosion protection layer (105), wherein the topcoat layer (107) comprises a corrosion inhibitor.

10. A method (300) for coating an article (100), comprising:
applying (301) a first corrosion protection layer (103) on a substrate (101) using a sol-gel composition comprising an organometallic compound and 3-glycidoxypropyltrimethoxy silane (GTMS);
applying (303) a second corrosion protection layer (105) on the first corrosion protection layer, wherein the second corrosion protection layer comprises a polyurethane composition, wherein the second corrosion protection layer comprises a corrosion inhibitor,
wherein the corrosion inhibitor comprises a plurality of thiol or sulfide containing corrosion inhibitor particles comprising at least one of a disulfide, a polydisulfide, and a dithiol compound.

11. The method (300) of claim 10, wherein the corrosion inhibitor particles are:
(a) non-chrome corrosion-inhibitor particles, wherein non-chrome refers to materials that are chromium free, and/or
(b) micronized particles and comprise mercaptan-terminated chains.

12. The method (300) of claim 10 or 11, wherein
(a) the first corrosion protection layer (103) also comprises a corrosion inhibitor; optionally wherein:
(i) the corrosion inhibitor of the first corrosion protection layer (103) is different than the corrosion inhibitor of the second corrosion protection layer (105), and/or
(ii) the corrosion inhibitor of the first corrosion protection layer (103) is as defined in claim 11; or
(b) the first corrosion protection layer (103) does not comprise the corrosion inhibitor.

13. The method (300) of any one of claims 10-12, wherein the sol-gel composition comprises (a) silicon and zirconium, optionally wherein the sol-gel composition comprises from 2 ml to 30 ml of an organometal and from 2 ml to 30 ml GTMS per 100 ml of prepared sol-gel solution.

14. The method (300) of any one of claims 10-13, wherein:
(a) the corrosion inhibitor is present in the first corrosion protection layer (103) in an amount of from 12 to 45 pigment volume concentration (PVC), wherein PVC is calculated as a percentage of the total volume of the corrosion inhibitor to the total volume of sol-gel reagents in unhydrolyzed form that form the sol-gel composition of the first corrosion protection layer, and/or
(b) the corrosion inhibitor is present in the second corrosion protection layer (105) in an amount of from 15 to 25 pigment volume concentration (PVC), wherein PVC is calculated as a percentage of the total volume of the corrosion inhibitor to the total volume of polyurethane reagents in unhydrolyzed form that form the polyurethane composition of the second corrosion protection layer.

15. The method (300) of any one of claims 10-14, further comprising applying (305) a topcoat layer (107) on the second corrosion protection layer (105), wherein the topcoat layer (107) comprises a corrosion inhibitor.

## Patentansprüche

1. Gegenstand (100) umfassend:
eine erste Korrosionsschutzschicht (103) auf einem Substrat (101) angeordnet, wobei die erste Korrosionsschutzschicht aus einer Sol-Gel-Zusammensetzung gebildet ist, die eine organometallische Verbindung und 3-Glycidoxypropyltrimethoxysilan (GTMS) umfasst; und
eine zweite Korrosionsschutzschicht (105) auf der ersten Korrosionsschutzschicht angeordnet, wobei die zweite Korrosionsschutzschicht eine Polyurethanzusammensetzung umfasst,
wobei die zweite Korrosionsschutzschicht einen Korrosionshemmer umfasst und wobei der Korrosionshemmer eine Vielzahl von thiol- oder sulfidhaltigen Korrosionshemmerpartikeln umfasst, die wenigstens eines von einem Disulfid, einem Polydisulfid und einer Dithiolverbindung umfassen.

2. Gegenstand (100) gemäß Anspruch 1, wobei die Korrosionshemmerpartikel chromfreie Korrosionshemmerpartikel sind, wobei chromfrei Materialien bezeichnet, die frei von Chrom sind.

3. Gegenstand (100) gemäß Anspruch 1 oder 2, wobei die Korrosionshemmerpartikel mikronisierte Partikel sind, die Mercaptan-terminierte Ketten umfassen.

4. Gegenstand (100) gemäß einem der Ansprüche 1-3, wobei die erste Korrosionsschutzschicht (103) auch einen Korrosionshemmer umfasst.

5. Gegenstand (100) gemäß Anspruch 4, wobei:
(i) der Korrosionshemmer der ersten Korrosionsschutzschicht (103) von dem Korrosionshemmer der zweiten Korrosionsschutzschicht (105) verschieden ist; und/oder
(ii) der Korrosionshemmer der ersten Korrosionsschutzschicht (103) wie in Anspruch 2 oder 3 definiert ist.

6. Gegenstand (100) gemäß einem der Ansprüche 1-3, wobei die erste Korrosionsschutzschicht (103) den Korrosionshemmer nicht umfasst.

7. Gegenstand (100) gemäß einem der Ansprüche 1-6, wobei die Sol-Gel-Zusammensetzung (a) Silicium und Zirkonium umfasst, wobei die Sol-Gel-Zusammensetzung gegebenenfalls von 2 ml bis 30 ml an einem Organometall und von 2 ml bis 30 ml GTMS pro 100 ml an hergestellter Sol-Gel-Lösung umfasst.

8. Gegenstand (100) gemäß einem der Ansprüche 1-7, wobei:
(a) der Korrosionshemmer in der ersten Korrosionsschutzschicht (103) in einer Menge von 12 bis 45 Pigmentvolumenkonzentration (PVC) vorhanden ist, wobei PVC als ein Prozentanteil des Gesamtvolumens des Korrosionshemmers bezogen auf das Gesamtvolumen an Sol-Gel-Reagenzien in nichthydrolsierter Form, die die Sol-Gel-Zusammensetzung der ersten Korrosionsschutzschicht bilden, berechnet ist, und/oder
(b) der Korrosionshemmer in der zweiten Korrosionsschutzschicht (105) in einer Menge von 15 bis 25 Pigmentvolumenkonzentration (PVC) vorhanden ist, wobei PVC als ein Prozentanteil des Gesamtvolumens des Korrosionshemmers bezogen auf das Gesamtvolumen an Polyurethanreagenzien in nichthydrolsierter Form, die die Polyurethanzusammensetzung der zweiten Korrosionsschutzschicht bilden, berechnet ist.

9. Gegenstand (100) gemäß einem der Ansprüche 1-8, ferner umfassend eine Deckschicht (107) auf der zweiten Korrosionsschutzschicht (105) angeordnet, wobei die Deckschicht (107) einen Korrosionshemmer umfasst.

10. Verfahren (300) zur Beschichtung eines Gegenstands (100), umfassend:
Aufbringen (301) einer ersten Korrosionsschutzschicht (103) auf ein Substrat (101) unter Verwendung einer Sol-Gel-Zusammensetzung, die eine organometallische Verbindung und 3-Glycidoxypropyltrimethoxysilan (GTMS) umfasst;
Aufbringen (303) einer zweiten Korrosionsschutzschicht (105) auf die erste Korrosionsschutzschicht, wobei die zweite Korrosionsschutzschicht eine Polyurethanzusammensetzung umfasst, wobei die zweite Korrosionsschutzschicht einen Korrosionshemmer umfasst,
wobei der Korrosionshemmer eine Vielzahl von thiol- oder sulfidhaltigen Korrosionshemmerpartikeln umfasst, die wenigstens eines von einem Disulfid, einem Polydisulfid und einer Dithiolverbindung umfassen.

11. Verfahren (300) gemäß Anspruch 10, wobei die Korrosionshemmerpartikel sind:
(a) chromfreie Korrosionshemmerpartikel, wobei chromfrei Materialien bezeichnet, die frei von Chrom sind, und/oder
(b) mikronisierte Partikel, die Mercaptan-terminierte Ketten umfassen.

12. Verfahren (300) gemäß Anspruch 10 oder 11, wobei
(a) die erste Korrosionsschutzschicht (103) auch einen Korrosionshemmer umfasst;
wobei gegebenenfalls:
(i) der Korrosionshemmer der ersten Korrosionsschutzschicht (103) von dem Korrosionshemmer der zweiten Korrosionsschutzschicht (105) verschieden ist, und/oder
(ii) der Korrosionshemmer der ersten Korrosionsschutzschicht (103) wie in Anspruch 11 definiert ist; oder
(b) die erste Korrosionsschutzschicht (103) den Korrosionshemmer nicht umfasst.

13. Verfahren (300) gemäß einem der Ansprüche 10-12, wobei die Sol-Gel-Zusammensetzung (a) Silicium und Zirkonium umfasst, wobei die Sol-Gel-Zusammensetzung gegebenenfalls von 2 ml bis 30 ml an einem Organometall und von 2 ml bis 30 ml GTMS pro 100 ml an hergestellter Sol-Gel-Lösung umfasst.

14. Verfahren (300) gemäß einem der Ansprüche 10-13, wobei:
(a) der Korrosionshemmer in der ersten Korrosionsschutzschicht (103) in einer Menge von 12 bis 45 Pigmentvolumenkonzentration (PVC) vorhanden ist, wobei PVC als ein Prozentanteil des Gesamtvolumens des Korrosionshemmers bezogen auf das Gesamtvolumen an Sol-Gel-Reagenzien in nichthydrolsierter Form, die die Sol-Gel-Zusammensetzung der ersten Korrosionsschutzschicht bilden, berechnet ist, und/oder
(b) der Korrosionshemmer in der zweiten Korrosionsschutzschicht (105) in einer Menge von 15 bis 25 Pigmentvolumenkonzentration (PVC) vorhanden ist, wobei PVC als ein Prozentanteil des Gesamtvolumens des Korrosionshemmers bezogen auf das Gesamtvolumen an Polyurethanreagenzien in nichthydrolsierter Form, die die Polyurethanzusammensetzung der zweiten Korrosionsschutzschicht bilden, berechnet ist.

15. Verfahren (300) gemäß einem der Ansprüche 10-14, ferner umfassend Aufbringen (305) einer Deckschicht (107) auf die zweite Korrosionsschutzschicht (105), wobei die Deckschicht (107) einen Korrosionshemmer umfasst.

## Revendications

1. Article (100), comprenant :
une première couche de protection contre la corrosion (103) disposée sur un substrat (101), la première couche de protection contre la corrosion étant formée à partir d'une composition sol-gel comprenant un composé organométallique et du 3-glycidoxypropyltriméthoxysilane (GTMS) ; et
une deuxième couche de protection contre la corrosion (105) disposée sur la première couche de protection contre la corrosion, la deuxième couche de protection contre la corrosion comprenant une composition de polyuréthane,
la deuxième couche de protection contre la corrosion comprenant un inhibiteur de corrosion et l'inhibiteur de corrosion comprenant une pluralité de particules d'inhibiteur de corrosion contenant thiol ou sulfure, comprenant au moins l'un parmi un disulfure, un polydisulfure et un composé de dithiol.

2. Article (100) de la revendication 1, les particules d'inhibiteur de corrosion étant des particules d'inhibiteur de corrosion non au chrome, les particules non au chrome faisant référence à des matériaux qui sont sans chrome.

3. Article (100) selon la revendication 1 ou 2, les particules d'inhibiteur de corrosion étant des particules micronisées et comprenant des chaînes à terminaison mercaptan.

4. Article (100) selon l'une quelconque des revendications 1-3, la première couche de protection contre la corrosion (103) comprenant également un inhibiteur de corrosion.

5. Article (100) selon la revendication 4,
(i) l'inhibiteur de corrosion de la première couche de protection contre la corrosion (103) étant différent de l'inhibiteur de corrosion de la deuxième couche de protection contre la corrosion (105) ; et/ou
(ii) l'inhibiteur de corrosion de la première couche de protection contre la corrosion (103) étant tel que défini dans la revendication 2 ou 3.

6. Article (100) selon l'une quelconque des revendications 1-3, la première couche de protection contre la corrosion (103) ne comprenant pas l'inhibiteur de corrosion.

7. Article (100) selon l'une quelconque des revendications 1-6, la composition sol-gel comprenant (a) du silicium et du zirconium, éventuellement la composition sol-gel comprenant de 2 ml à 30 ml d'un composé organométallique et de 2 ml à 30 ml de GTMS par 100 ml de solution sol-gel préparée.

8. Article (100) selon l'une quelconque des revendications 1 à 7,
(a) l'inhibiteur de corrosion étant présent dans la première couche de protection contre la corrosion (103) en une quantité allant de 12 à 45 concentration en volume de pigment (PVC), la PVC étant calculée comme un pourcentage du volume total de l'inhibiteur de corrosion par rapport au volume total de réactifs sol-gel sous forme non hydrolysée qui forment la composition sol-gel de la première couche de protection contre la corrosion, et/ou
(b) l'inhibiteur de corrosion étant présent dans la deuxième couche de protection contre la corrosion (105) en une quantité allant de 15 à 25 concentration en volume de pigment (PVC), la PVC étant calculée comme un pourcentage du volume total de l'inhibiteur de corrosion par rapport au volume total de réactifs de polyuréthane sous forme non hydrolysée qui forment la composition de polyuréthane de la deuxième couche de protection contre la corrosion.

9. Article (100) selon l'une quelconque des revendications 1-8, comprenant en outre une couche de finition (107) disposée sur la deuxième couche de protection contre la corrosion (105), la couche de finition (107) comprenant un inhibiteur de corrosion.

10. Procédé (300) pour le revêtement d'un article (100), comprenant :
une application (301) d'une première couche de protection contre la corrosion (103) sur un substrat (101) à l'aide d'une composition sol-gel comprenant un composé organométallique et du 3-glycidoxypropyltriméthoxysilane (GTMS) ;
une application (303) d'une deuxième couche de protection contre la corrosion (105) sur la première couche de protection contre la corrosion, la deuxième couche de protection contre la corrosion comprenant une composition de polyuréthane, la deuxième couche de protection contre la corrosion comprenant un inhibiteur de corrosion,
l'inhibiteur de corrosion comprenant une pluralité de particules d'inhibiteur de corrosion contenant thiol ou sulfure comprenant au moins l'un parmi un disulfure, un polydisulfure et un composé de dithiol.

11. Procédé (300) selon la revendication 10, les particules d'inhibiteur de corrosion étant :
(a) des particules d'inhibiteur de corrosion non au chrome, les particules non au chrome faisant référence à des matériaux qui sont sans chrome, et/ou
(b) des particules micronisées et comprenant des chaînes à terminaison mercaptan.

12. Procédé (300) selon la revendication 10 ou 11,
(a) la première couche de protection contre la corrosion (103) comprenant également un inhibiteur de corrosion ; éventuellement :
(i) l'inhibiteur de corrosion de la première couche de protection contre la corrosion (103) étant différent de l'inhibiteur de corrosion de la deuxième couche de protection contre la corrosion (105), et/ou
(ii) l'inhibiteur de corrosion de la première couche de protection contre la corrosion (103) étant tel que défini dans la revendication 11 ; ou
(b) la première couche de protection contre la corrosion (103) ne comprenant pas l'inhibiteur de corrosion.

13. Procédé (300) selon l'une quelconque des revendications 10-12, la composition sol-gel comprenant (a) du silicium et du zirconium, éventuellement la composition sol-gel comprenant de 2 ml à 30 ml d'un composé organométallique et de 2 ml à 30 ml de GTMS par 100 ml de solution sol-gel préparée.

14. Procédé (300) selon l'une quelconque des revendications 10 à 13,
(a) l'inhibiteur de corrosion étant présent dans la première couche de protection contre la corrosion (103) en une quantité allant de 12 à 45 concentration en volume de pigment (PVC), la PVC étant calculée comme un pourcentage du volume total de l'inhibiteur de corrosion par rapport au volume total de réactifs sol-gel sous forme non hydrolysée qui forment la composition sol-gel de la première couche de protection contre la corrosion, et/ou
(b) l'inhibiteur de corrosion étant présent dans la deuxième couche de protection contre la corrosion (105) en une quantité allant de 15 à 25 concentration en volume de pigment (PVC), la PVC étant calculée comme un pourcentage du volume total de l'inhibiteur de corrosion par rapport au volume total de réactifs de polyuréthane sous forme non hydrolysée qui forment la composition de polyuréthane de la deuxième couche de protection contre la corrosion.

15. Procédé (300) selon l'une quelconque des revendications 10-14, comprenant en outre l'application (305) d'une couche de finition (107) sur la deuxième couche de protection contre la corrosion (105), la couche de finition (107) comprenant un inhibiteur de corrosion.
